# NEUE EUROPÄISCHE PATENTSCHRIFT

(11) **EP 3 041 674 B2**
(45) Veröffentlichungstag und Bekanntmachung des Hinweises auf die Entscheidung über den Einspruch: **21.10.2020**
(45) Hinweis auf die Patenterteilung: 02.08.2017
(21) Anmeldenummer: 14755351.5
(22) Anmeldetag: 20.08.2014
(51) Int. Cl.: B32B 15/08, B32B 38/06, B32B 38/18, B60R 13/08, B29C 45/16

(54) **HALBZEUG UND VERFAHREN ZUR HERSTELLUNG EINES DREIDIMENSIONAL GEFORMTEN HYBRIDBAUTEILS IM METALL/KUNSTSTOFFVERBUND SOWIE VERWENDUNG EINES SOLCHEN HALBZEUGS**
SEMI-FINISHED PRODUCT AND METHOD FOR PRODUCING A THREE-DIMENSIONALLY SHAPED HYBRID COMPONENT IN THE METAL/PLASTICS COMPOSITE, AND THE USE OF SUCH A SEMI-FINISHED PRODUCT
PRODUIT SEMI-FINI ET PROCÉDÉ PERMETTANT DE FABRIQUER UNE PIÈCE MOULÉE HYBRIDE TRIDIMENSIONNELLE DANS UN COMPOSITE MÉTAL/MATIÈRE PLASTIQUE, ET UTILISATION DUDIT PRODUIT SEMI-FINI

(30) Priorität: 03.09.2013 DE 102013109616
(43) Veröffentlichungstag der Anmeldung: 13.07.2016
(73) Patentinhaber: ThyssenKrupp Steel Europe AG, 47166 Duisburg (DE)
(72) Erfinder: KRAHNERT, Torsten, 34560 Fritzlar (DE); PATBERG, Lothar, 47445 Moers (DE); MAYER, Stefan, 58239 Schwerte (DE); KALEMBA, Dieter, 42553 Velbert (DE)
(74) Vertreter: thyssenkrupp Intellectual Property GmbH
(86) Internationale Anmeldenummer: PCT/EP2014/067763
(87) Internationale Veröffentlichungsnummer: WO 2015/032623

(56) Entgegenhaltungen:
- WO-A1-90/03267
- WO-A1-2006/096894
- WO-A1-2014/118213
- WO-A2-2005/061203
- DE-A1- 3 537 020
- DE-A1-102010 039 270
- GB-A- 2 390 053
- US-A1- 2003 176 128
- US-A1- 2004 003 908
- US-A1- 2007 246 296

## Beschreibung

Die Erfindung betrifft ein Verfahren zur Herstellung eines dreidimensional geformten Hybridbauteils im Metall/Kunststoffverbund.

Im Bauwesen und insbesondere im Fahrzeugbau werden in hohem Maße Leichtbauteile verwendet, welche neben einem geringen Gewicht zusätzlich hohe Festigkeiten und Steifigkeiten aufweisen müssen. Häufig dienen entsprechende Leichtbauteile in einer Fahrzeugkarosserie als crashrelevante Strukturbauteile, wie etwa eine B-Säule, ein Stoßfänger oder ein Seitenaufprallträger. Ein Ansatz zur Erreichung derartiger Leichtbauteile ist, unterschiedliche Werkstoffe miteinander zu kombinieren.

Im Bereich Kunststoff und faserverstärkter Kunststoff hat die Firma LANXESS AG in Kooperation mit dem Lehrstuhl für Kunststofftechnik aus Erlangen den sogenannten "Erlanger Träger" entwickelt. Dies ist ein für Standarduntersuchungen verwendeter Modellträger, zu dessen Herstellung ein Organoblech (faserverstärkter Kunststoff) oberhalb seiner Schmelztemperatur erhitzt, in ein Umformwerkzeug eingelegt, umgeformt und anschließend durch ein integriertes Spritzgussaggregat mit einer dreidimensionalen Rippenstruktur versehen wird. Bei diesem Modelträger liegen die mechanischen Kennwerte signifikant höher als bei einem Pendant auf der Basis von Blech. Dadurch können solche Strukturen deutlich mehr Energie aufnehmen. Weitere Simulationen von 3-Punkt-Biegungen am Erlanger Träger haben ergeben, dass ein Verbund aus einem umgeformten Stahlblech mit einer Rippenstruktur entsprechend dem Erlanger Träger im Vergleich zur Ausgangsvariante des Erlangerträgers (Organoblech mit angespritzter Rippenstruktur) mehr als doppelt so hohe Kräfte aufnehmen kann. Da jedoch die Materialien Metall und Kunststoff artfremd sind, müssen geeignete Verbindungsmaßnahmen vorgesehen werden. Der herkömmliche Herstellungsprozess umfasst folgende Arbeitsschritte:
1. Stahlblech konfektionieren (zuschneiden)
2. zugeschnittenes Blech umformen
3. umgeformtes Blech entölen
4. Aufbringen einer Klebstoffschicht
5. Transportieren des umgeformten, klebstoffbeschichteten Blechs zum Spritzgusswerkzeug und Einlegen in das Werkzeug
6. Hinter- oder Umspritzen des Blechs mit Kunststoff, so dass eine Rippenstruktur erzeugt wird.

Dieser Prozess ist sehr kostenintensiv. Insbesondere sind heutige Klebstoffe für die Automobilindustrie sehr preisintensiv. All dies hält viele Automobilhersteller bzw. Zulieferer von der Verwendung von Hybridbauteilen im Metall/Kunststoffverbund ab, so dass sie das insoweit vorhandene Leichtbaupotential nicht nutzen können.

Aus der DE 199 34 545 C1 sind Hybridbauteile bekannt, die einen aus einer Metallplatine geformten Profilkörper aufweisen, der mit Kunststoff so hinterspritzt ist, dass der Kunststoff einen kreuzförmige Rippen aufweisenden Strukturkörper definiert. Um eine ausreichende Verbindung von Metall und Kunststoff zu erreichen, wird gemäß der DE 199 34 545 C1 ein partieller Formschluss des Kunststoffs mit dem metallischen Profilkörper hergestellt. Der Formschluss wird dabei durch ein partielles Umgreifen des Profilkörpers sowie durch Umspritzen von Durchbrechungen des Profilkörpers erreicht. An den Durchbrechungen entstehen punktuelle Verankerungen zwischen Metall und Kunststoff. Diese partiellen Formschlussverbindungsstellen sind jedoch bei vielen Bauteilen hinsichtlich der äußeren Erscheinung des Bauteils unerwünscht. Zudem ist das Lastaufnahmevermögen solcher Hybridbauteile aufgrund der partiellen Formschlussverbindungen mitunter unbefriedigend.

Als weiteren Stand der Technik ist das Dokument DE 10 2010 039 270 A1 zu nennen.

Davon ausgehend lag der Erfindung die Aufgabe zugrunde, ein Verfahren zur Herstellung eines dreidimensional geformten Hybridbauteils im Metall/Kunststoffverbund zur Verfügung zu stellen, das es Automobilherstellern bzw. ihren Zulieferern ermöglicht, entsprechende Hybridbauteile mit hohem Lastaufnahmevermögen deutlich kostengünstiger herzustellen als dies mit dem oben erwähnten, 6 Arbeitsschritte umfassenden Prozess der Fall ist.

Die genannte Aufgabe wird durch ein Verfahren mit den Merkmalen des Anspruchs 1 gelöst. Vorteilhafte Ausgestaltungen des erfindungsgemäßen Verfahrens sind Gegenstand der auf Anspruch 1 rückbezogenen Ansprüche 2 bis 12.

Die Erfindung basiert auf der Grundidee, für die Herstellung eines dreidimensional geformten Hybridbauteils im Metall/Kunststoffverbund ein Halbzeug zur Verfügung zustellen, das einen im Wesentlichen vollflächig haftenden Verbund zwischen Metall und Kunststoff ermöglicht, ohne dass es hierzu seitens des Automobilherstellers bzw. Hybridbauteil-Herstellers des Auftragens einer Klebstoffschicht bedarf, indem das Halbzeug aus mindestens einem platinen- oder bandförmiges Metallblech und mindestens einer darauf stoffschlüssig aufgebrachten thermoplastischen Kunststoffschicht aufgebaut ist, wobei die Seite des Metallblechs, auf welcher die Kunststoffschicht aufgebracht ist, eine die Haftung der Kunststoffschicht verbessernde Oberfläche aufweist, und wobei die Kunststoffschicht als Koppelschicht zur stoffschlüssigen, klebstofflosen Anbindung mindestens eines aus Kunststoff hergestellten oder herzustellenden Strukturkörpers ausgebildet ist.

Je nach Oberflächenbehandlung können verschiedene thermoplastische Kunststoffe als Koppelschicht verwendet werden, insbesondere Polypropylen (PP), Polyamid (PA), Polyethylen (PE), Polyethylenterephthalat (PET), thermoplastisches Elastomer sowie Compounds dieser Kunststoffe, wobei Polyamid, Polyethylen oder deren Mischungen wegen ihrer relativ hohen Temperaturbeständigkeit besonders bevorzugt sind.

Das Metallblech des Halbzeuges ist vorzugsweise aus Stahlwerkstoff, besonders bevorzugt aus Dualphasen-Stahl oder einem anderen Leichtbaustahl hergestellt. Stahlwerkstoff zeichnet sich durch eine gute Umformbarkeit und hohe Festigkeit aus. Das Gefüge von Dualphasen-Stahl besteht vornehmlich aus einer weichen ferritischen Matrix, in die eine zweite, harte, überwiegend martensitische Phase inselförmig eingelagert ist. Der Ferritanteil beträgt bis zu 90 %. Neben Martensit können auch Anteile von Restaustenit und Bainit vorhanden sein. Bleche aus Dualphasen-Stahl eignen sich besonders für Kaltumformungen mit hohem Streckziehanteil zur Herstellung festigkeitsrelevanter Strukturelemente und Karosserieteile. Warmgewalzter Dualphasen-Stahl weist insbesondere Vorteile bei der gewichtssparenden Herstellung von Bauteilen wie Profilen, Karosserieverstärkungen und Fahrwerksteilen auf. Nach einer entsprechenden Wärmebehandlung, z.B. der sogenannten Bake-Hardening-Behandlung, werden zusätzliche Festigkeitszuwächse von über 30 MPa erreicht.

Das mindestens eine Metallblech des Halbzeugs hat beispielsweise eine Dicke im Bereich von 0,1 bis 2,5 mm, vorzugsweise 0,1 bis 1,0 mm, besonders bevorzugt im Bereich von 0,1 bis 0,5 mm.

Die mindestens eine Kunststoffschicht (Koppelschicht) des Halbzeugs kann dagegen eher etwas dünner ausgebildet sein. Sie besitzt beispielsweise eine Dicke im Bereich von 0,01 bis 1,2 mm, vorzugsweise 0,05 bis 1,0 mm, besonders bevorzugt im Bereich von 0,3 bis 0,8 mm.

In seitens der Anmelderin durchgeführten Versuchen hat sich gezeigt, dass ein Halbzeug, dessen Metallblech und Koppelschicht Dicken in den genannten Bereichen aufweisen, im Tiefungsversuch nach Erichsen bei Raumtemperatur und Werkzeugtemperatur von 100°C gut tiefziehfähig ist. Die als Koppelschicht dienende thermoplastische Kunststoffschicht fließt beim Tiefziehen des Halbzeugs mit dem Metallblech mit und verliert dabei seine Haftung nicht.

Anstelle eines Metallblechs aus Stahlwerkstoff kann das Halbzeug auch ein Metallblech aus Magnesium oder Aluminium aufweisen.

Die Funktion der thermoplastischen Kunststoffschicht (Koppelschicht) des Halbzeugs besteht darin, dass sich diese mit einer Vielzahl von anderen Kunststoffen zuverlässig, ohne Aufbringen von Klebstoff, stoffschlüssig verbinden lässt. Im Spritzgussprozess wird hierzu die Energie der Kunststoffschmelze genutzt, um die Oberfläche der Koppelschicht zu aktivieren und den Stoffschluss herzustellen. Nach Abkühlung der Schmelze liegt ein perfekter Verbund zwischen der Koppelschicht und dem angespritzten Kunststoff vor. Bei dem angespritzten Kunststoff kann es sich nicht nur um thermoplastischen Kunststoff, sondern auch um duroplastischen Kunststoff und/oder um einen Kunststoff aus dem Bereich der Elastomere handeln. Weiterhin ist es möglich, durch Plasma- oder Koronavorbehandlung vor dem Spritzgießprozess die Koppelschichtoberfläche zusätzlich zu aktivieren, um das Spektrum der einsetzbaren Kunststoffe zu erweitern.

Mit dem Halbzeug lassen sich die am Standort eines Automobilherstellers bzw. Bauteilzulieferers auszuführenden Arbeitsschritte zur Herstellung eines dreidimensional geformten Hybridbauteils erheblich reduzieren. Denn der Automobilhersteller bzw. Bauteilzulieferer hat mit dem Halbzeug insbesondere die Möglichkeit, ein dreidimensional geformtes Hybridbauteils durch folgende Prozessschritte herzustellen:
1. Platinen- oder bandförmiges Halbzeug konfektionieren (zuschneiden)
2. Zugeschnittenes Halbzeug zu einem Umformwerkzeug mit integriertem Spritzgießaggregat transportieren und einlegen
3. Umformen und Hinterspritzen des Halbzeugzuschnitts in einem Schritt.

Eine vorteilhafte Ausgestaltung des Halbzeugs ist dadurch gekennzeichnet, dass die Kunststoffschicht (Koppelschicht) die Seite des Metallblechs, auf welcher sie aufgebracht ist, nicht vollflächig, sondern partiell bedeckt. Diese Ausgestaltung ist insbesondere dann zweckmäßig, wenn das herzustellende Hybridbauteil beispielsweise nur partiell eine festigkeits- und/oder steifigkeitserhöhende Rippenstruktur aus Kunststoff aufweist. Ein oder mehrere größere Flächenbereiche des Metallblechs, die nach Fertigstellung des Hybridbauteils keine Rippenstruktur aufweisen sollen, können somit beim Beschichten des Metallblechs mit der mindestens einen thermoplastischen Kunststoffschicht (Koppelschicht) unbeschichtet bleiben. Dies spart Materialkosten und trägt zu einer optimierten Gewichtseinsparung bei ausreichenden Festigkeits- bzw. Steifigkeitseigenschaften bei.

Eine weitere vorteilhafte Ausgestaltung des Halbzeugs besteht darin, dass die thermoplastische Kunststoffschicht doppelt ausgeführt ist, wobei zwischen den beiden Kunststoffschichten eine thermoplastische Schaumstoffschicht angeordnet ist. Es hat sich gezeigt, dass die Zwischenanordnung einer thermoplastischen Schaumstoffschicht deutlich zur Gewichtsreduzierung des Hybridbauteils bei gleichbleibender Festigkeit und Steifigkeit beitragen kann.

Nach einer weiteren vorteilhaften Ausgestaltung ist die Kunststoffschicht (Koppelschicht) des Halbzeugs partiell mit mindestens einem Organoblech beschichtet. Hierdurch kann die Festigkeit und Steifigkeit des herzustellenden Hybridbauteils bei gleichbleibendem oder sogar vermindertem Gesamtgewicht deutlich verbessert werden.

Alternativ oder zusätzlich kann nach einer weiteren Ausgestaltung des Halbzeugs auch dessen (mindestens eines) Metallblech auf seiner der Kunststoffschicht (Koppelschicht) abgewandten Seite mit mindestens einem Organoblech beschichtet sein. Auch durch diese Ausgestaltung kann die Festigkeit und Steifigkeit des herzustellenden Hybridbauteils bei gleichbleibendem oder sogar vermindertem Gesamtgewicht deutlich erhöht werden. Dabei kann nach einer weiteren Ausgestaltung das Organoblech auf seiner dem Metallblech abgewandten Seite mit mindestens einem zweiten Metallblech beschichtet sein. Aus einem solchen Halbzeug lassen sich besonders leichte und zugleich sehr feste und steife Hybridbauteile herstellen, insbesondere dann, wenn das Organoblech nach einer bevorzugten Ausgestaltung Kohlenstofffasern enthält. Zudem kann in weiterer Ausgestaltung das zweite Metallblech außenseitig mit einer thermoplastischen Kunststoffschicht beschichtet sein, die ebenfalls als Koppelschicht zur stoffschlüssigen, klebstofflosen Anbindung mindestens eines aus Kunststoff hergestellten oder herzustellenden Strukturkörpers ausgebildet ist. Aus einem derart ausgestalteten Halbzeug lassen sich vorteilhaft, ohne einen Auftrag von Klebstoff, Hybridbauteile herstellen, die beidseitig aus Kunststoff hergestellte Strukturkörper, insbesondere Rippenkörper aufweisen.

Eine andere vorteilhafte Ausgestaltung des Halbzeugs besteht darin, dass das Metallblech auf seiner der Kunststoffschicht abgewandten Seite mit einer zweiten thermoplastischen Kunststoffschicht beschichtet ist, die ebenfalls als Koppelschicht zur stoffschlüssigen, klebstofflosen Anbindung mindestens eines aus Kunststoff hergestellten oder herzustellenden Strukturkörpers ausgebildet ist. Auch aus einem solchen Halbzeug lassen sich ohne Auftrag von Klebstoff Hybridbauteile herstellen, die beidseitig aus Kunststoff hergestellte Strukturkörper, insbesondere Rippenkörper aufweisen.

Dabei kann die zweite Kunststoffschicht (Koppelschicht) die Seite des Metallblechs, auf welcher sie aufgebracht ist, vollflächig oder partiell bedecken. Die partielle Beschichtung des Metallblechs durch die zweite Kunststoffschicht ist zum Beispiel zweckmäßig, wenn das herzustellende Hybridbauteil auf der entsprechenden Seite des Metallblechs nur partiell eine Rippenstruktur aus Kunststoff aufweist, die ohne Klebstoff über die partielle Koppelschicht an das Metallblech stoffschlüssig angebunden ist.

Eine weitere vorteilhafte Ausgestaltung des Halbzeugs besteht darin, dass die zweite Kunststoffschicht auf ihrer dem Metallblech abgewandten Seite mit einem zweiten Metallblech beschichtet ist. Das zweite Metallblech kann dabei in weiterer Ausgestaltung auf seiner der zweiten Kunststoffschicht abgewandten Seite mit einer dritten thermoplastischen Kunststoffschicht als Koppelschicht beschichtet sein. Auch mit derart ausgestalteten Halbzeugen lassen sich leichtgewichtige Hybridbauteile mit hoher Festigkeit und Steifigkeit kostengünstig herstellen. Das Gleiche gilt für eine weitere Ausgestaltung des Halbzeugs, bei welcher die zweite Kunststoffschicht vollflächig oder partiell mit mindestens einem Organoblech beschichtet ist.

Nach einer weiteren Ausgestaltung des Halbzeugs ist die jeweilige als Koppelschicht dienende Kunststoffschicht mit einer abziehbaren Schutzfolie versehen. Die Schutzfolie schützt die Oberfläche der Koppelschicht während des Transportes des Halbzeuges sowie gegebenenfalls auch während des Umformens des Halbzeugs. Hierdurch kann vor dem Anformen von Kunststoffstrukturen, beispielsweise Kunststoffrippen, ein aufwendiges Reinigen der Koppelschichtoberfläche von Verschmutzungen wie Öl oder Fett entfallen. Zudem kann die Schutzfolie als Ziehfolie die Gleiteigenschaften des Halbzeuges beim Umformen verbessern.

Das Halbzeug ist vorzugsweise als Flachprodukt ausgebildet. Es kann mittels einer Plattenpresse in einem statischen Prozess, einer Intervallheizpresse in einem diskontinuierlichen Prozess oder einer Laminieranlage, beispielsweise einer Doppelbandpresse, in einem kontinuierlichen Prozess hergestellt werden. Die Prozessparameter werden dabei jeweils speziell auf das herzustellende Halbzeug eingestellt. Je nach Halbzeugvarianten können daraus Tafeln geschnitten werden; oder das bandförmige Halbzeug kann zu einem Coil aufgerollt werden.

Gemäß der vorliegenden Erfindung wird die oben aufgezeigte Aufgabe für ein Verfahren zur Herstellung eines dreidimensional geformten Hybridbauteils im Metall/Kunststoffverbund durch die Verwendung eines Halbzeugs in einer der oben genannten Ausgestaltungen gelöst, wobei an die als Koppelschicht ausgebildete Kunststoffschicht durch Spritzgießen oder Pressformen ein Strukturkörper aus Kunststoff stoffschlüssig angeformt wird.

Wie bereits ausgeführt, ermöglicht das Halbzeug die Herstellung eines dreidimensional geformten Hybridbauteils aus Metall und Kunststoff mit einem Strukturkörper, vorzugsweise Rippenkörper, aus Kunststoff ohne Auftrag von Klebstoff. Dies vereinfacht die Herstellung des Hybridbauteils deutlich.

Eine zweckmäßige Ausgestaltung des erfindungsgemäßen Verfahrens besteht darin, dass das Halbzeug vor dem Anformen des Strukturkörpers in eine dreidimensionale Form umgeformt wird. Das Umformen wird dabei vorzugsweise durch Tiefziehen oder Rollformen ausgeführt.

Eine erste Alternative des erfindungsgemäßen Verfahrens ist dadurch gekennzeichnet, dass das Halbzeug mittels eines Umformwerkzeuges, das mindestens eine integrierte Spritzgießkavität und mindestens einen in die Spritzgießkavität mündenden Spritzgießkanal aufweist, umgeformt wird, wobei an dem Hybridbauteil mindestens ein integraler Flansch ausgebildet wird, der die als Koppelschicht ausgebildete thermoplastische Kunststoffschicht aufweist, und dass an die Kunststoffschicht ein weiteres als Metall/Kunststoffverbund ausgeführtes Hybridbauteil oder ein Organoblech durch Schweißen angefügt wird. Diese Ausgestaltung bietet die Möglichkeit, die Anzahl der Prozessschritte zur Herstellung des Hybridbauteils zu reduzieren, indem das Umformen des Halbzeuges bzw. Halbzeugzuschnitts und das Hinterspritzen der Koppelschicht zur Erzeugung des Strukturkörpers, vorzugsweise Rippenkörpers, im gleichen Prozessschritt durchgeführt werden.

Eine zweite Alternative des erfindungsgemäßen Verfahrens ist dadurch gekennzeichnet, dass das Halbzeug mittels eines Umformwerkzeuges, welches ein Profil mit mindestens einer integrierten Kavität zum Verpressen und dreidimensionalen Formen einer Kunststoffmasse aufweist, umgeformt wird, wobei an dem Hybridbauteil mindestens ein integraler Flansch ausgebildet wird, der die als Koppelschicht ausgebildete thermoplastische Kunststoffschicht aufweist, und dass an die Kunststoffschicht ein weiteres als Metall/Kunststoffverbund ausgeführtes Hybridbauteil oder ein Organoblech durch Schweißen angefügt wird. Auch diese Variante bietet die Möglichkeit, die Anzahl der Prozessschritte zur Herstellung des Hybridbauteils zu reduzieren, indem das Umformen des Halbzeuges bzw. Halbzeugzuschnitts und das Verpressen der Kunststoffmasse zur Erzeugung des Strukturkörpers, vorzugsweise Rippenkörpers, auf der Koppelschicht im gleichen Prozessschritt durchgeführt werden.

Eine weitere Variante des erfindungsgemäßen Verfahrens besteht darin, dass das Halbzeug durch Rollformen umgeformt wird, wobei während oder nach dem Umformen des Halbzeuges ein rotierbares, radförmiges Werkzeug zum Pressformen des Strukturkörpers verwendet wird, und wobei das Werkzeug mit einem mindestens eine Kavität aufweisenden Profil zum Verpressen und dreidimensionalen Formen einer Kunststoffmasse versehen ist. Mit dieser Ausgestaltung des Verfahrens lassen sich insbesondere als Profilträger ausgebildete Hybridbauteile der genannten Art in Großserie effektiv herstellen.

Erfindungsgemäß wird an dem Hybridbauteil mindestens ein integraler Flansch ausgebildet, der die als Koppelschicht ausgebildete thermoplastische Kunststoffschicht aufweist, wobei an die Kunststoffschicht ein weiteres als Metall/Kunststoffverbund ausgeführtes Hybridbauteil oder ein Organoblech durch Schweißen angefügt wird. Auf diese Weise lassen sich beispielsweise als Halbschalen ausgebildete Hybridbauteile kostengünstig zu einem Hohlkanal oder geschlossenen Profil zusammensetzen. Entsprechendes gilt hinsichtlich einer Kombination eines Hybridbauteils mit einem den Hohlkanal bzw. das geschlossene Profil begrenzenden Organoblech. Die Schweißverbindung der als Halbschalen ausgebildeten Hybridbauteile bzw. des Organoblechs mit einem einzelnen Hybridbauteil kann beispielsweise durch Reibschweißen, Punktschweißen, Ultraschallschweißen etc. erzeugt werden.

Das Halbzeug wird vorteilhaft zur Herstellung eines dreidimensional geformten Hybridbauteils als Bauteil für ein Fahrzeug, Flugzeug, Schiff oder Bauwerk verwendet. Vorteile ergeben sich nämlich durch das Halbzeug überall dort, wo eine Gewichtseinsparung gefragt ist und hierzu Hybridbauteile der genannten Art in möglichst wenigen Prozessschritten hergestellt werden sollen.

Nachfolgend wird die Erfindung anhand einer mehrere Ausführungsbeispiele darstellenden Zeichnung näher erläutert.

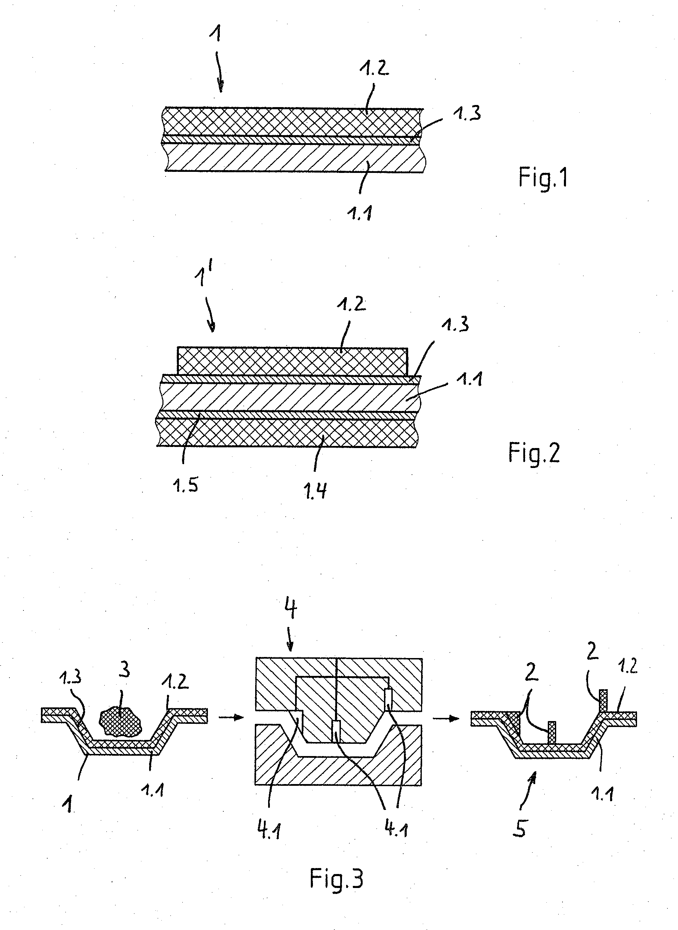

Fig. 1 zeigt schematisch den Grundaufbau eines Halbzeugs 1 zur Herstellung eines dreidimensional geformten Hybridbauteils im Metall/Kunststoffverbund. Das Halbzeug 1 ist im Wesentlichen flächig ausgebildet. Es weist mindestens ein platinen- oder bandförmiges Metallblech 1.1, beispielsweise Stahlblech, und mindestens eine auf dem Metallblech 1.1 stoffschlüssig aufgebrachte thermoplastische Kunststoffschicht 1.2 auf. Die Seite des Metallblechs 1.1, auf der die Kunststoffschicht 1.2 aufgebracht ist, besitzt eine die Haftung der Kunststoffschicht verbessernde Oberfläche (Grenzfläche) 1.3. Hierzu wurde das Metallblech einer entsprechenden Oberflächenbehandlung unterworfen. Bei der Oberflächenbehandlung kann es sich insbesondere um eine Plasmabehandlung, Plasmabeschichtung, Koronabehandlung oder das Auftragen einer Schicht im Coil-Coating-Verfahren handeln. Die stoffschlüssige Verbindung von Metallblech 1.1 und Kunststoffschicht 1.2 erfolgt vorzugsweise ohne Klebstoff. Die Haftung der Kunststoffschicht 1.2 ist so hoch, dass es beim Umformen des Halbzeuges 1 zu keinem Ablösen der Kunststoffschicht 1.2 vom Metallblech 1.1 kommt.

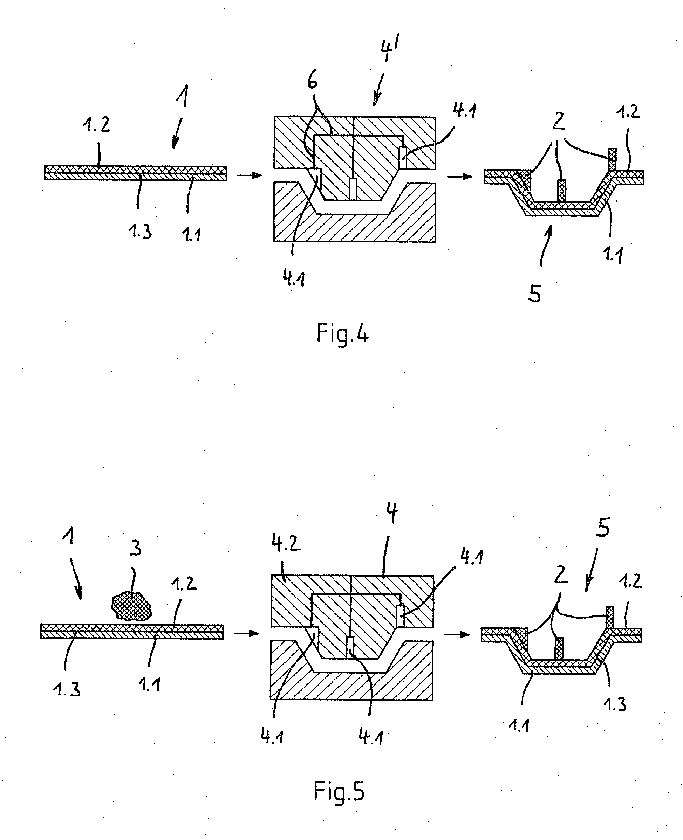

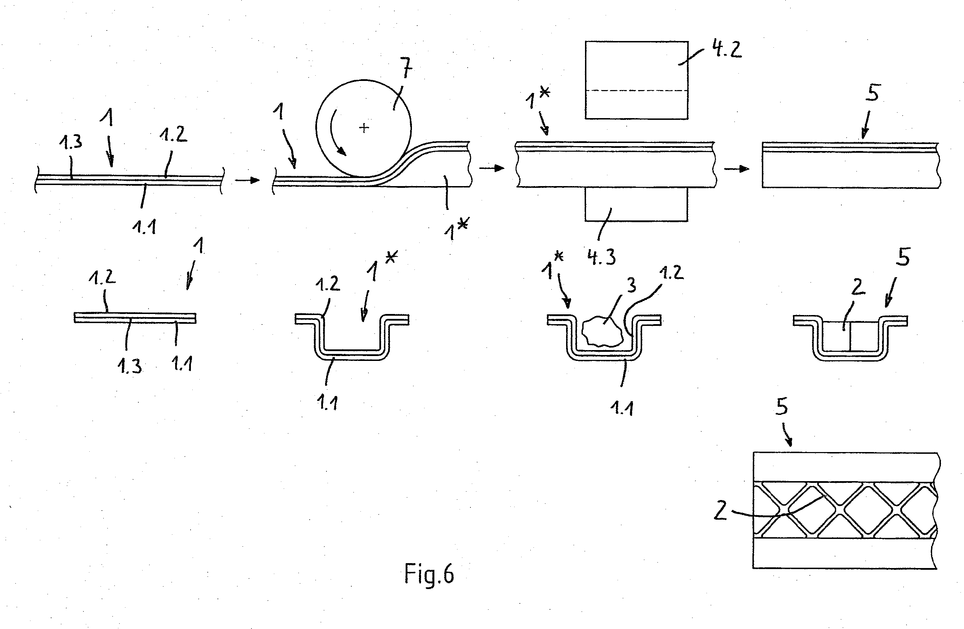

Die stoffschlüssig auf das Metallblech 1.1 aufgebrachte thermoplastische Kunststoffschicht 1.2 dient als Koppelschicht zur stoffschlüssigen, klebstofflosen Anbindung mindestens eines aus Kunststoff hergestellten oder herzustellenden Strukturkörpers 2, beispielsweise Rippenkörpers (vgl. insbesondere Fig.4 und Fig. 6). Die thermoplastische Kunststoffschicht 1.2 besteht beispielsweise aus Polyamid, Polyethylen oder einem Compound dieser Kunststoffe und weist eine Dicke im Bereich von 0,01 bis 1,2 mm, vorzugsweise 0,05 bis 1,0 mm, besonders bevorzugt im Bereich von 0,3 bis 0,8 mm auf. Das flächige Halbzeug 1 ist tiefziehfähig und wird in Plattenform oder als Coil zur Weiterverarbeitung bereitgestellt.

Bei dem in Fig. 2 schematisch dargestellten Halbzeug 1' ist das Metallblech (z.B. Stahlblech) 1.1 beidseitig mit einer als Koppelschicht dienenden thermoplastischen Kunststoffschicht 1.2, 1.4 entsprechend Fig. 1 beschichtet. Hierzu wurde das Metallblech 1.1 zuvor beidseitig oberflächenbehandelt, um eine zuverlässige Haftung der jeweiligen Kunststoffschicht 1.2, 1.4 an dem Metallblech 1.1 zu erreichen. Die oberflächenbehandelten Flächen (Grenzflächen) sind mit 1.3 und 1.5 bezeichnet. Wie in Fig. 2 gezeigt, kann mindestens eine (1.2) der thermoplastischen Koppelschichten das Metallblech 1.1 nur partiell bedecken.

Das Halbzeug 1, 1' wird für metallische Umformprozesse bereitgestellt. Hierbei kann die mindestens eine thermoplastische Koppelschicht 1.2 bzw. 1.4 eine gleitende Wirkung ausüben, so dass auf übliche Schmier- und Gleitmittel, wie etwa Tiefziehöle, verzichtet werden kann.

Ein umgeformtes Halbzeug (Werkstück) 1, 1' kann nicht erfindungsgemäß in einem nachfolgenden Prozessschritt mit einem Strukturkörper, beispielsweise einem Rippenkörper, aus Kunststoff versehen werden, wobei der Strukturkörper (Rippenkörper) 2 an die Koppelschicht 1.2 und/oder 1.4 stoffschlüssig, ohne Klebstoff angeformt wird. Dies kann durch Spritzgießen oder, wie in Fig. 3 (nicht erfindungsgemäß) skizziert, durch Formpressen einer plastifizierten Kunststoffmasse 3 erfolgen. Das Formwerkzeug 4 ist hierzu mit einem eine entsprechende Kavität 4.1 aufweisenden Profil zum Verpressen und dreidimensionalen Formen der Kunststoffmasse 3 versehen. Nach Öffnen des Formwerkzeuges 4 kann das fertige Hybridbauteil 5 entnommen werden.

Bei dem in Fig. 4 schematisch dargestellten Ausführungsbeispiel wird ein konfektioniertes Halbzeug 1 in einem Prozessschritt umgeformt und im geschlossenen Zustand des Umformwerkzeuges 4' mittels eines integrierten Spritzgusseinrichtung 6 mit Kunststoff hinterspritzt. Das Halbzeug 1 wird hierzu auf ein bestimmtes Temperaturniveau erwärmt, um eine optimale Verbindung zwischen der Koppelschicht des Halbzeuges 1 und der durch Spritzgießen herzustellenden Kunststoffstruktur 2 zu ermöglichen. Die schmelzflüssige Kunststoffmasse wird unter Druck mittels der Spritzgießeinrichtung 6 auf die Koppelschicht 1.2 des umgeformten Halbzeugs 1 gespritzt, wobei in dem Umformwerkzeug ausgebildete Formgebungselemente bzw. Kavitäten 4.1 die gewünschte Endkontur der angespritzten Kunststoffstruktur bewirken. Nach Öffnen des Formwerkzeuges 4 kann das fertige Hybridbauteil 5 entnommen werden.

Bei dem in Fig. 5 schematisch dargestellten Ausführungsbeispiel wird der dreidimensionale Strukturkörper 2, beispielsweise Rippenkörper, des Hybridbauteils 5 wiederum durch Formpressen einer Kunststoffmasse 3 hergestellt. In diesem Beispiel wird die Kunststoffmasse 3 auf das flächige, noch nicht umgeformte Halbzeug 1 abgelegt. Das Formen der Kunststoffmasse 3 erfolgt während des Umformens des Halbzeuges 1 innerhalb des Umformwerkzeuges 4. Der Stempel 4.2 des Werkzeuges 4 hat hierzu ein Profil mit mindestens einer integrierten Kavität 4.1 zum Verpressen und dreidimensionalen Formen der Kunststoffmasse 3. Nach Öffnen des Formwerkzeuges 4 wird das fertige Hybridbauteil 5 entnommen.

In Fig. 6 ist ein weiteres Ausführungsbeispiel einer erfindungsgemäßen Herstellung eines Hybridbauteils 5 im Metall/Kunststoffverbund skizziert. Das Hybridbauteil 5 wird in diesem Fall unter Anwendung von Rollformen hergestellt. Ein bandförmiges oder längliches Halbzeug 1 wird mittels einer Rollformvorrichtung 7 in ein Profil 1*, beispielsweise ein U-Profil oder Hutprofil umgeformt. In das umgeformte Halbzeug 1 (Profil 1*) wird dann auf dessen Koppelschicht 1.2 eine Kunststoffmasse aufgebracht, die anschließend mittels einer einen Stempel 4.2 und eine Matrize 4.3 aufweisenden Presse zu einem dreidimensionalen Strukturkörper bzw. Rippenkörper 2 geformt wird.

Die Ausführung der Erfindung ist nicht auf die in der Zeichnung schematisch dargestellten Ausführungsbeispiele beschränkt. Vielmehr sind zahlreiche Varianten möglich, die auch bei von der Zeichnung abweichender Gestaltung von der in den Ansprüchen angegebenen Erfindung Gebrauch machen. So kann das Halbzeug 1, 1' insbesondere noch mindestens eine weitere Metallblechschicht, Kunststoffschicht (Koppelschicht) und/oder Organoblechschicht aufweisen. Ferner liegt es im Rahmen der Erfindung, das Halbzeug 1, 1' durch Rollformen umzuformen, wobei während dem Umformen des Halbzeuges ein rotierbares, radförmiges Werkzeug zum Pressformen des Strukturkörpers 2 verwendet wird, und wobei das Werkzeug mit einem mindestens eine Kavität aufweisenden Profil zum Verpressen und dreidimensionalen Formen einer Kunststoffmasse 3 versehen ist.

## Patentansprüche

1. Verfahren zur Herstellung eines dreidimensional geformten Hybridbauteils (5) im Metall/Kunststoffverbund, **gekennzeichnet durch** die Verwendung eines tiefziehfähigen, platinen- oder bandförmigen Halbzeugs (1, 1'), das mindestens ein platinen- oder bandförmiges Metallblech (1.1) und mindestens eine auf dem Metallblech stoffschlüssig aufgebrachte thermoplastische Kunststoffschicht (1.2, 1.4) aufweist, wobei die Seite des Metallblechs (1.1), auf welcher die Kunststoffschicht (1.2, 1.4) aufgebracht ist, eine die Haftung der Kunststoffschicht (1.2, 1.4) verbessernde Oberfläche (1.3, 1.5) aufweist, wobei die Kunststoffschicht (1.2, 1.4) als Koppelschicht zur stoffschlüssigen, klebstofflosen Anbindung mindestens eines aus Kunststoff hergestellten oder herzustellenden Strukturkörpers (2) ausgebildet ist, wobei an die als Koppelschicht ausgebildete Kunststoffschicht (1.2, 1.4) durch Spritzgießen oder Pressformen ein Strukturkörper (2) aus Kunststoff stoffschlüssig angeformt wird, wobei das Halbzeug (1, 1') mittels eines Umformwerkzeuges (4'), das mindestens eine integrierte Spritzgießkavität (4.1) und mindestens einen in die Spritzgießkavität (4.1) mündenden Spritzgießkanal aufweist, oder mittels eines Umformwerkzeuges (4), das ein Profil mit mindestens einer integrierten Kavität (4.1) zum Verpressen und dreidimensionalen Formen einer Kunststoffmasse (3) aufweist, umgeformt wird,
wobei an dem Hybridbauteil (5) mindestens ein integraler Flansch ausgebildet wird, der die als Koppelschicht ausgebildete thermoplastische Kunststoffschicht (1.2) aufweist, und dass an die Kunststoffschicht (1.2) ein weiteres als Metall/Kunststoffverbund ausgeführtes Hybridbauteil (5) oder ein Organoblech durch Schweißen angefügt wird.

2. Verfahren nach Anspruch 1, **dadurch gekennzeichnet, dass** das Halbzeug vor dem Anformen des Strukturkörpers (2) in eine dreidimensionale Form umgeformt wird.

3. Verfahren nach Anspruch 2, **dadurch gekennzeichnet, dass** das Umformen durch Tiefziehen oder Rollformen ausgeführt wird.

4. Verfahren nach Anspruch 1, **dadurch gekennzeichnet, dass** das Halbzeug (1, 1') durch Rollformen umgeformt wird, wobei während oder nach dem Umformen des Halbzeuges ein rotierbares, radförmiges Werkzeug zum Pressformen des Strukturkörpers (2) verwendet wird, und wobei das Werkzeug mit einem mindestens eine Kavität aufweisenden Profil zum Verpressen und dreidimensionalen Formen einer Kunststoffmasse (3) versehen ist.

5. Verfahren nach Anspruch 4, **dadurch gekennzeichnet, dass** die beiden Hybridbauteile (5) zu einem Hohlkanal oder geschlossenen Profil zusammengesetzt werden.

6. Verfahren nach Anspruch 4, **dadurch gekennzeichnet, dass** das Hybridbauteil und das Organoblech zu einem Hohlkanal oder geschlossenen Profil zusammengesetzt werden.

7. Verfahren nach einem der Ansprüche 1 bis 6, **dadurch gekennzeichnet, dass** das Metallblech (1.1) des verwendeten Halbzeugs (1, 1') eine Dicke im Bereich von 0,1 bis 2,5 mm, vorzugsweise 0,1 bis 1,0 mm, besonders bevorzugt im Bereich von 0,1 bis 0,5 mm aufweist.

8. Verfahren nach einem der Ansprüche 1 bis 7, **dadurch gekennzeichnet, dass** die Kunststoffschicht (1.2, 1.4) des verwendeten Halbzeugs (1, 1') aus Polyamid, Polyethylen, Polypropylen, thermoplastischem Elastomer oder deren Mischungen hergestellt ist.

9. Verfahren nach einem der Ansprüche 1 bis 8, **dadurch gekennzeichnet, dass** die Kunststoffschicht (1.2, 1.4) des verwendeten Halbzeugs (1, 1') eine Dicke im Bereich von 0,01 bis 1,2 mm, vorzugsweise 0,05 bis 1,0 mm, besonders bevorzugt im Bereich von 0,3 bis 0,8 mm aufweist.

10. Verfahren nach einem der Ansprüche 1 bis 9, **dadurch gekennzeichnet, dass** die Kunststoffschicht (1.2) des verwendeten Halbzeugs (1') die Seite des Metallblechs (1.1), auf welcher sie aufgebracht ist, partiell bedeckt.

11. Verfahren nach einem der Ansprüche 1 bis 10, dass die thermoplastische Kunststoffschicht (1.2, 1.4) des verwendeten Halbzeugs (1, 1') doppelt ausgeführt ist, wobei zwischen den beiden Kunststoffschichten eine thermoplastische Schaumstoffschicht angeordnet ist.

12. Verfahren nach einem der Ansprüche 1 bis 11, **dadurch gekennzeichnet, dass** die Kunststoffschicht (1.2, 1.4) des verwendeten Halbzeugs (1,1') partiell mit mindestens einem Organoblech beschichtet ist.

## Claims

1. Method for producing a three-dimensionally shaped hybrid component (5) of a metal/plastic composite, **characterized by** using a semifinished product (1, 1') in the form of a sheet blank or strip that can undergo deep drawing, which comprises at least one metal sheet (1.1) in the form of a sheet blank or strip and at least one layer of thermoplastic (1.2, 1.4) applied in a material-bonding manner on the metal sheet, the side of the metal sheet (1.1) on which the layer of plastic (1.2, 1.4) is applied having a surface (1.3, 1.5) that improves the adherence of the layer of plastic (1.2, 1.4), the layer of plastic (1.2, 1.4) being formed as a coupling layer for the material-bonding, adhesive-free attachment of at least one structural body (2) produced or to be produced from plastic, a structural body (2) of plastic being molded in a material-bonding manner onto the layer of plastic (1.2, 1.4) formed as a coupling layer by injection molding or press-forming
whereby the semifinished product (1, 1') undergoes forming by means of a forming mold (4'), which has at least one integrated injection-molding cavity (4.1) and at least one injection-molding runner entering the injection-molding cavity (4.1)
or
undergoes forming by means of a forming mold (4), which has a profile with at least one integrated cavity (4.1) for the pressing and three-dimensional shaping of a plastics compound (3),
**characterized in that** at least one integral flange that has the layer of thermoplastic (1.2) formed as a coupling layer is formed on the hybrid component (5), and **in that** a further hybrid component (5), configured as a metal/plastic composite, or an organometallic sheet is joined onto the layer of plastic (1.2) by welding.

2. Method according to Claim 1, **characterized in that**, before the structural body (2) is molded on, the semifinished product undergoes forming into a three-dimensional form.

3. Method according to Claim 2, **characterized in that** the forming process is performed by deep drawing or roll-forming.

4. Method according to Claim 1, **characterized in that** the semifinished product (1, 1') undergoes forming by roll-forming, a rotatable, wheel-shaped tool being used for the press-forming of the structural body (2) during or after the forming of the semifinished product, and the tool being provided with a profile having at least one cavity for the pressing and three-dimensional shaping of a plastics compound (3).

5. Method according to Claim 4, **characterized in that** the two hybrid components (5) are put together to form a hollow channel or closed profile.

6. Method according to Claim 4, **characterized in that** the hybrid component and the organometallic sheet are put together to form a hollow channel or closed profile.

7. Method according to one of Claims 1 to 6, **characterized in that** the metal sheet (1.1) of the semifinished product (1, 1') used has a thickness in the range of 0.1 to 2.5 mm, preferably 0.1 to 1.0 mm, particularly preferably in the range of 0.1 to 0.5 mm.

8. Method according to one of claims 1 to 7, **characterized in that** the layer of plastic (1.2, 1.4) of the semifinished product (1, 1') used is produced from polyamide, polyethylene, polypropylene, thermoplastic elastomer or mixtures thereof.

9. Method according to one of Claims 1 to 8, **characterized in that** the layer of plastic (1.2, 1.4) of the semifinished product (1, 1') used has a thickness in the range of 0.01 to 1.2 mm, preferably 0.05 to 1.0 mm, particularly preferably in the range of 0.3 to 0.8 mm.

10. Method according to one of Claims 1 to 9, **characterized in that** the layer of plastic (1.2) of the semifinished product (1') used partially covers the side of the metal sheet (1.1) on which it is applied.

11. Method according to one of Claims 1 to 10, in that the layer of thermoplastic (1.2, 1.4) of the semifinished product (1, 1') used is made double, a layer of thermoplastic foam being arranged between the two layers of plastic.

12. Method according to one of Claims 1 to 11, **characterized in that** the layer of plastic (1.2, 1.4) of the semifinished product (1, 1') used is partially coated with at least one organometallic sheet.

## Revendications

1. Procédé destiné à la fabrication d'un élément de structure hybride (5), moulé en trois dimensions dans un composite en métal/plastique, **caractérisé par** l'utilisation d'un produit semi-fini (1, 1') emboutissable en forme de plaque ou de bande, qui présente au moins une tôle métallique (1.1) en forme de plaque ou de bande et au moins une couche de matière thermoplastique (1.2, 1.4) appliquée par liaison de matière sur la tôle métallique, selon lequel la face de la tôle métallique (1.1), sur laquelle est appliquée la couche de matière thermoplastique (1.2, 1.4), présente une surface (1.3, 1.5) qui améliore l'adhérence de la couche de matière thermoplastique (1.2, 1.4), selon lequel la couche de matière thermoplastique (1.2, 1.4) est conçue sous la forme d'une couche de liaison en vue de l'assemblage par liaison de matière, sans recourir à l'utilisation d'un agent adhésif, d'au moins un corps de la structure (2) fabriqué, ou devant être fabriqué, en matière plastique, et selon lequel un corps de la structure (2) en matière plastique est moulé par liaison de matière à la couche de matière thermoplastique (1.2, 1.4), laquelle est conçue sous la forme d'une couche de liaison, par une opération de moulage par injection ou de moulage à la presse **caractérisé**
**en ce que** le produit semi-fini (1, 1') est remodelé au moyen d'un outil de façonnage (4'), lequel présente au moins une cavité intégrée de moulage par injection (4.1) et au moins un canal de moulage par injection qui débouche dans la cavité de moulage par injection (4.1)
ou
est remodelé au moyen d'un outil de façonnage (4), lequel présente un profil avec au moins une cavité (4.1) intégrée en vue du pressage et du moulage tridimensionnel d'une masse de matière plastique (3),
et **caractérisé en ce qu'**au moins une flasque intégrale est conçue au niveau de l'élément de structure hybride (5), laquelle présente la couche de matière thermoplastique (1.2) qui est conçue sous la forme d'une couche de liaison, et **caractérisé en ce qu'**un autre élément de structure hybride (5), lequel est exécuté sous la forme d'un composite en métal ou en matière plastique, ou une feuille organique thermoformée est mis(e) en place sur la couche de matière thermoplastique (1.2) par une opération de soudage.

2. Procédé selon la revendication 1, **caractérisé en ce que** le produit semi-fini est remodelé en une forme tridimensionnelle avant le formage du corps de la structure (2).

3. Procédé selon la revendication 2, **caractérisé en ce que** le remodelage est exécuté par une opération d'emboutissage ou de profilage.

4. Procédé selon la revendication 1, **caractérisé en ce que** le produit semi-fini (1, 1') est remodelé par une opération de profilage, selon lequel un outil est utilisé, lequel est capable de rotation et est en forme de roue, en vue du moulage à la presse du corps de la structure (2), pendant ou après le remodelage du produit semi-fini, et selon lequel l'outil est doté d'au moins un profil, lequel présente une cavité, en vue du pressage et du moulage en trois dimensions d'une masse de matière plastique (3).

5. Procédé selon la revendication 4, **caractérisé en ce que** les deux éléments de structure hybrides (5) sont assemblés en un canal creux ou en un profil fermé.

6. Procédé selon la revendication 4, **caractérisé en ce que** l'élément de structure hybride et la feuille organique thermoformée sont assemblés en un canal creux ou en un profil fermé.

7. Procédé selon l'une des revendications 1 à 6, **caractérisé en ce que** la tôle métallique (1.1) du produit semi-fini (1, 1') employé présente une épaisseur comprise entre 0,1 et 2,5 mm, de préférence comprise entre 0,1 et 1,0 mm, de manière particulièrement préférée comprise entre 0,1 et 0,5 mm.

8. Procédé selon l'une des revendications 1 à 7, **caractérisé en ce que** la couche de matière thermoplastique (1.2, 1.4) du produit semi-fini (1, 1') employé est fabriquée en polyamide, en polyéthylène, en polypropylène, en élastomère thermoplastique ou à partir des mélanges de ces composants.

9. Procédé selon l'une des revendications 1 à 8, **caractérisé en ce que** la couche de matière thermoplastique (1.2, 1.4) du produit semi-fini (1, 1') employé présente une épaisseur comprise entre 0,01 et 1,2 mm, de préférence comprise entre 0,05 et 1,0 mm, de manière particulièrement préférée comprise entre 0,3 et 0,8 mm.

10. Procédé selon l'une des revendications 1 à 9, **caractérisé en ce que** la couche de matière thermoplastique (1.2) du produit semi-fini (1') employé recouvre en partie la face de la tôle métallique (1.1), sur laquelle elle est appliquée.

11. Procédé selon l'une des revendications 1 à 10, la couche de matière thermoplastique (1.2, 1.4) du produit semi-fini (1, 1') employé est exécutée de manière double, selon lequel une couche de matière en mousse thermoplastique est disposée entre les deux couches de matière thermoplastique.

12. Procédé selon l'une des revendications 1 à 11, **caractérisé en ce que** la couche de matière thermoplastique (1.2, 1.4) du produit semi-fini (1, 1') employé est partiellement revêtue d'au moins une feuille organique thermoformée.
